# FASCICULE DE BREVET EUROPEEN

(11) **EP 0 915 260 B1**
(45) Date de publication et mention de la délivrance du brevet: **18.12.2002**
(21) Numéro de dépôt: 98420199.6
(22) Date de dépôt: 04.11.1998
(51) Int. Cl.: F16B 11/00, F16D 1/08, B25H 7/00

(54) **Procédé de fixation d'un organe de guidage sur un support, dispositif de guidage obtenu par ce procédé et appareil de marquage comprenant un tel dispositif**
Befestigungsverfahren für ein Führungsglied auf einem Träger, nach diesem Verfahren hergestellte Führungseinrichtung und Markierungsgerät mit einer solchen Vorrichtung
Method of fastening a guiding device on a support, guiding device obtained by this method and marking apparatus comprising such a device

(30) Priorité: 05.11.1997 FR 9714180
(43) Date de publication de la demande: 12.05.1999
(73) Titulaire: Curreno, Marie-Christine, 69140 Rillieux (FR)
(72) Inventeur: Curreno, Marie-Christine, 69140 Rillieux (FR)
(74) Mandataire: Myon, Gérard Jean-Pierre

(56) Documents cités:
- FR-A- 2 109 232
- US-A- 4 620 814
- US-A- 5 002 411

## Description

La présente invention a trait à un procédé de fixation d'un organe de guidage sur un support, un dispositif de guidage obtenu selon le procédé et un appareil de marquage comportant au moins un tel dispositif.

Il est nécessaire de positionner chaque organe de guidage par rapport aux portées qui le reçoivent, de manière extrêmement minutieuse. A cet effet, il est connu d'usiner les surfaces de portées évoquées ci-dessus, selon des cotes précises par rapport à une surface de référence du support, de manière à réaliser des ouvertures dans lesquelles les organes de guidage sont introduites avec un jeu réduit.

Un tel procédé présente cependant certains inconvénients. En effet, il implique un usinage extrêmement minutieux, ce qui induit un temps et un coût de fabrication élevés.

De plus, dans le cas d'appareils dont la tenue mécanique est faible, comme des appareils de marquage, la qualité de géométrie espérée n'est pas toujours obtenue une fois l'assemblage réalisé. En effet, l'appareil de marquage est susceptible de se déformer sous l'effet des contraintes exercées par le bridage intervenant durant l'usinage correspondant, ou bien encore sous l'influence des efforts de croupe des outils assurant cet usinage.

Afin de pallier les inconvénients de l'art antérieur évoqués ci-dessus, l'invention a pour objet un procédé de fixation d'un organe de guidage sur un support qui assure un positionnement précis de ces différents éléments les uns par rapport aux autres, tout en générant des efforts mécaniques limités.

A cet effet, l'invention a pour objet un procédé de fixation d'un organe de guidage sur un support, dans lequel on ménage dans le support au moins une ouverture propre à recevoir une extrémité de l'organe de guidage, et on introduit cette extrémité dans l'ouverture, caractérisé en ce qu'on réalise l'ouverture selon des dimensions transversales supérieures à celles de l'extrémité qui y est reçue, on place l'organe de guidage dans la position précise qu'il doit occuper, on délimite ainsi un espace intercalaire entre la périphérie extérieure de l'extrémité et les parois en regard de l'ouverture, on remplit cet espace intercalaire avec une résine polymérisable et l'on fait polymériser ladite résine de façon à assujettir l'extrémité par rapport à l'ouverture.

Le procédé conforme à l'invention permet de réaliser les objectifs précédemment mentionnés.

En effet, étant donné que chaque ouverture est réalisée selon des dimensions transversales supérieures à celles de l'extrémité de l'organe de guidage qui y est reçu, l'usinage correspondant ne requiert aucune précision particulière. Il peut donc être réalisé de manière nettement plus rapide que ceux mis en oeuvre dans les procédés de l'art antérieur, et n'implique pas de bridage des différents éléments.

La phase de positionnement relatif de l'organe de guidage et de l'ouverture dans laquelle ce dernier est inséré, peut être mise en oeuvre grâce à des moyens mécaniques simples, par exemple un système de calage. Ceci n'induit donc pas d'efforts importants susceptibles d'altérer la géométrie de l'ensemble de l'appareil une fois réalisé.

Enfin, la résine polymérisable introduite au sein de l'espace intercalaire ménagé entre l'organe de guidage et l'ouverture qui le reçoit, assure une fixation fiable de chaque organe de guidage sur le support.

L'invention a également pour objet un dispositif de guidage obtenu selon le procédé ci-dessus, comprenant au moins un organe de guidage fixé sur un support, chaque extrémité de cet organe étant logée dans une ouverture correspondante ménagée dans le support, caractérisé en ce que cette ouverture a des dimensions transversales supérieures à celles de l'extrémité de l'organe de guidage, un fourreau formé d'une résine polymérisable à l'état solide étant coulé in-situ entre la périphérie extérieure de cette extrémité et les parois en regard de l'ouverture.

Le dispositif de guidage peut comporter une ou plusieurs des caractéristiques suivantes :
- l'organe de guidage peut coulisser axialement par rapport au fourreau et il est prévu, au voisinage de chaque extrémité de l'organe de guidage, des moyens amovibles d'immobilisation axiale de cette extrémité par rapport au support ;
- les moyens d'immobilisation amovibles comprennent au moins un élément de fixation vissé dans une paroi du support au voisinage de l'ouverture, une partie dudit élément débordant au niveau de l'ouverture de manière à retenir en butée l'extrémité de l'organe de guidage ;
- l'extrémité de l'organe de guidage comporte un décrochement, les moyens d'immobilisation amovibles comprenant une poche de la résine, disposée au voisinage du décrochement ;
- la périphérie extérieure des extrémités de l'organe de guidage est entourée au moyen d'une bague éventuellement chanfreinée ;
- un revêtement anti-adhésif est disposé à la périphérie extérieure des extrémités de l'organe de guidage ;
- les extrémités de l'organe de guidage sont reliées par une partie médiane de plus faible section.

L'invention a enfin pour objet un appareil de marquage comportant au moins un dispositif de guidage tel que décrit ci-dessus.

L'invention va être décrite ci-dessous, en référence aux dessins annexés, donnés uniquement à titre d'exemple et dans lesquels :
- la figure 1 est une vue schématique en perspective d'un appareil de marquage conforme à l'invention ;
- la figure 2 est une vue en coupe schématique illustrant la phase de positionnement d'un organe de guidage de l'appareil de marquage de la figure 1 ;
- les figures 3 et 4 sont des vues schématiques en coupe illustrant une première variante de réalisation, dans deux phases de montage d'un organe de guidage ;
- les figures 5 à 7 sont des vues analogues aux figures 3 et 4, illustrant une seconde variante de réalisation de l'invention, dans trois phases de montage d'un organe de guidage ;
- les figures 8 et 9 sont des vues analogues aux figures 3 à 7, illustrant deux variantes supplémentaires de l'invention.

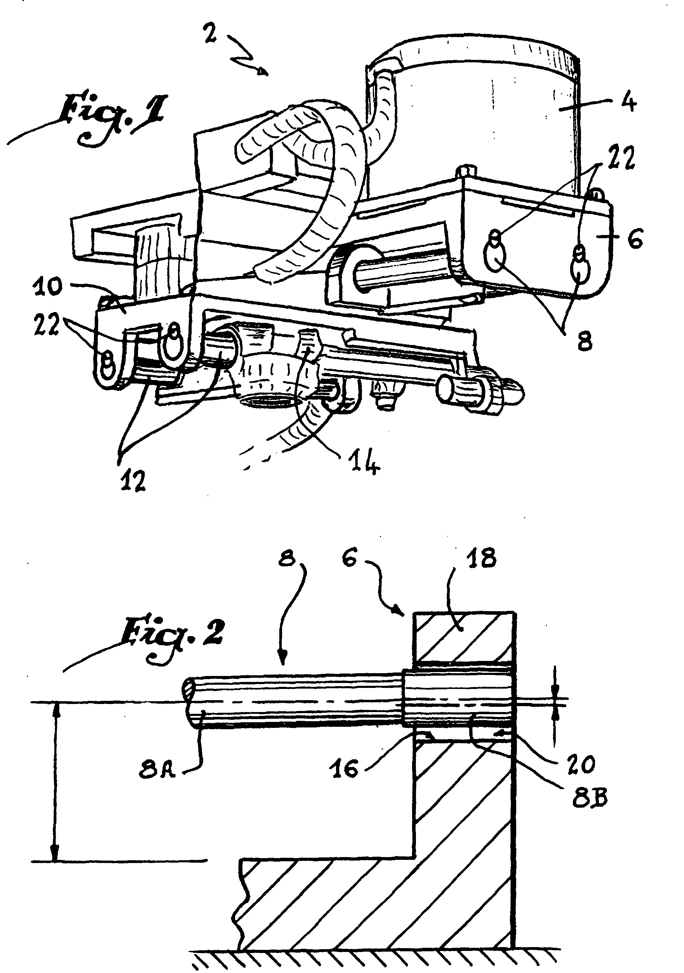

L'appareil de marquage représenté à la figure 1 et désigné dans son ensemble par la référence 2 comprend, de manière connue en soi, un bâti fixe 4 comprenant deux rebords 6 en regard supportant deux barres 8 constituant des organes de guidage, en vue du déplacement selon l'axe de ces barres d'un premier chariot 10. Ce dernier est également muni de deux barres 12 de guidage, les deux paires de barres 8, 12 étant disposées sensiblement à angle droit.

Les barres 12 assurent le guidage d'un second chariot 14 sur lequel est destinée à être rapportée une tête de marquage non représentée. Les deux chariots 10, 14 constituent donc le mécanisme d'entraînement de l'appareil de marquage, et assurent le positionnement de la tête de marquage selon deux directions orthogonales entre elles. L'entraînement respectif des deux chariots 10, 14 est assuré, de manière connue en soi, par l'intermédiaire de moteurs électriques non représentés.

La fixation de chaque barre sur son support respectif va être décrite dans ce qui suit, en référence aux figures 2 à 9. Dans ces dernières, il sera uniquement fait référence à la fixation des barres 8 sur les rebords 6 du bâti 4. La fixation des barres 12 sur le premier chariot 10 est bien évidemment analogue.

Comme le montre la figure 2, chaque barre 8 comprend une partie médiane 8A cylindrique terminée par deux extrémités cylindriques 8B de plus grand diamètre, dont une seule est représentée. La barre 8 est destinée à être fixée sur le rebord 6 par ses extrémités 8B. Chacune de ces dernières est reçue au niveau d'une ouverture traversante cylindrique 16, ménagée dans le rebord 6. Cette ouverture 16 présente une dimension transversale, à savoir un diamètre D, qui est substantiellement supérieure à celle de l'extrémité 8B, à savoir son diamètre d.

En vue de la fixation de la barre 8 sur le rebord 6, il convient tout d'abord d'introduire chaque extrémité 8B au sein de l'ouverture 16, puis de les positionner relativement selon la conformation que doit présenter le dispositif de marquage une fois réalisé. A cet effet, la barre 8 est maintenue par rapport à une surface de référence du bâti 4, en l'occurrence une embase 6A rectifiée au préalable, à des distances et selon des orientations appropriées. Ce maintien peut être assuré, par exemple, par un système de cales. Il est à noter que, dans l'exemple représenté, la barre 8 et l'ouverture 16 ne sont pas rigoureusement coaxiales.

Etant donné que les diamètres respectifs de l'extrémité 8B de la barre 8 et de l'ouverture 16 sont sensiblement différents, la périphérie extérieure de l'extrémité 8B définit, avec les parois de l'ouverture 16 en regard, un espace intercalaire 20 à peu près annulaire. Tout en maintenant la barre 8 et le rebord 6 dans leurs positions relatives évoquées ci-dessus, on remplit alors cet espace intercalaire 20 au moyen d'une résine polymérisable, par exemple une résine époxy ou polyuréthane. On peut également prévoir d'utiliser d'autres types de matériaux durcissables équivalents.

On assure ensuite la polymérisation de cette résine, de manière connue en soi. Une fois cette polymérisation achevée, la résine solidifiée remplissant l'espace intercalaire 20 forme un fourreau au sein duquel est maintenue l'extrémité 8B de la barre. De la sorte, la barre 8 et le rebord 6 sont parfaitement assujettis l'un par rapport à l'autre, selon des dimensions et des orientations correspondant à l'agencement visé du dispositif de marquage. Il est alors possible d'ôter le système de calage ayant contribué au maintien relatif de la barre et du chariot durant le temps de polymérisation de la résine.

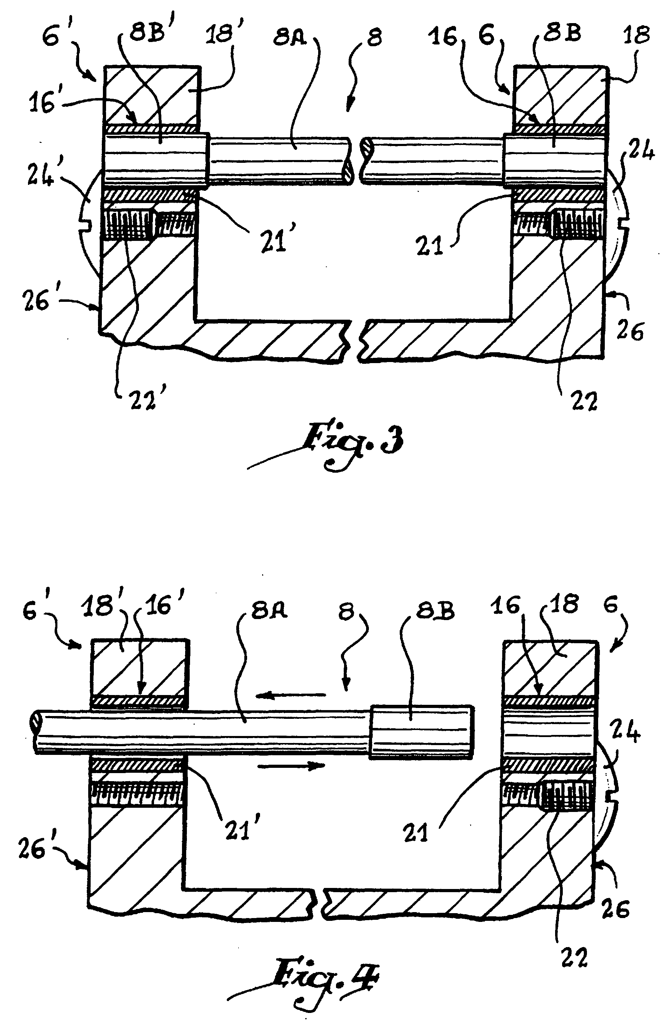

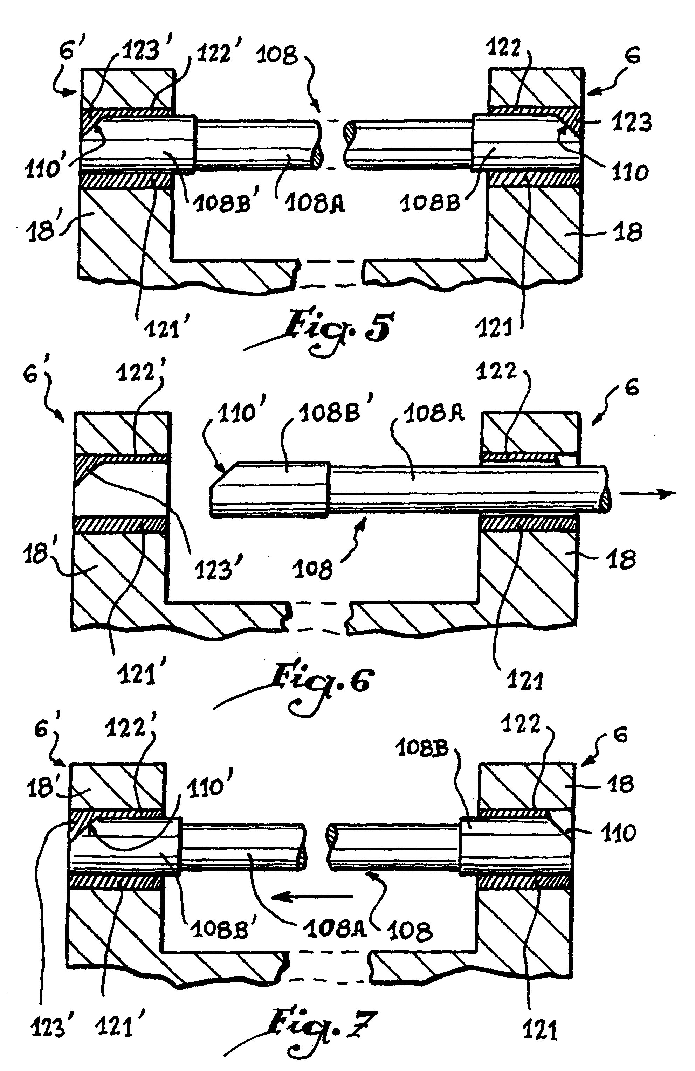

Les figures 3 et 4 illustrent une première variante de réalisation de l'invention. La barre 8, qui est montée dans deux ouvertures 16, 16' ménagées dans les rebords 6, 6' en regard du bâti 4, est analogue à celle représentée à la figure 2. Toutefois, la périphérie extérieure des extrémités 8B de cette barre 8 est recouverte au moyen d'un vernis anti-adhésif qui leur permet de coulisser librement dans les fourreaux 21, 21' de résine remplissant les espaces intercalaires désignés par la référence 20 à la figure 2.

Deux vis 22, 22' sont engagées dans chaque rebord 6, 6'. Leur tête 24, 24' est disposée contre la face extérieure 26, 26' de chaque rebord 6, 6' et s'étend au voisinage de chaque ouverture 16, 16' de sorte que chaque extrémité 8B, 8B' de la barre 8 vienne en butée contre la tête de ces vis. La barre 8 est donc immobilisée transversalement, au niveau de ses extrémités 8B, 8B', par l'intermédiaire des fourreaux 21, 21' de résine. De plus, cette barre 8 est immobilisée axialement selon deux sens opposés, grâce à la tête 24, 24' des vis 22, 22'.

Dans le cas où il se révèle nécessaire de changer la barre 8, par exemple en vue de sa réparation, il convient d'enlever l'une des vis qui l'immobilise axialement, en l'occurrence la vis 8' dans l'exemple représenté à la figure 4. Grâce à la présence du vernis anti-adhésif, l'extrémité 8B' est libre de coulisser axialement au sein du fourreau 21', de même que l'extrémité opposée 8B. Etant donné que la partie médiane 8A de la barre 8 est de plus faible section que les extrémités, il est superflu de la recouvrir d'un tel vernis anti-adhésif en vue d'assurer son passage au travers du fourreau 21'. Il est à noter que, durant cette opération de démontage, la seconde vis 22 reste engagée dans le rebord 6.

Le montage d'une nouvelle barre sur son support est particulièrement aisé. Il convient tout d'abord d'en recouvrir les extrémités au moyen du vernis anti-adhésif. Puis, on introduit l'une des extrémités de cette barre au sein du fourreau 21' dont l'accès n'est pas interdit par la présence d'une vis. On fait ensuite coulisser cette première extrémité dans ce fourreau 21'. On y fait ensuite passer la partie médiane, puis on y fait coulisser la seconde extrémité de cette barre. Cette dernière est alors positionnée de manière précise dans une direction axiale, du fait de la présence de la vis 22 contre laquelle la première extrémité de cette nouvelle barrre vient en butée. De plus, cette dernière est parfaitement positionnée selon une direction transversale, du fait de la présence des fourereaux de résine 21, 21' ayant servi à immobiliser la première barre 8. L'assujettissement en translation de la nouvelle barre est réalisé en replaçant la vis 22', ôtée en vue du démontage de la première barre 8, à son emplacement originel.

Grâce à ce mode de réalisation, il n'est nécessaire ni de détruire la résine de scellement, ni d'utiliser l'outillage particulier ayant servi au positionnement et à l'assujettissement de la première barre 8.

Les figures 5 à 7 illustrent une seconde variante de réalisation de l'invention. Conformément à cette variante, la barre 108 diffère de celle 8 représentée aux figures 2 à 4, en ce sens que chacune de ses extrémités 108B, 108B' est pourvue d'un chanfrein distal 110, 110', de sorte qu'elles s'évasent en direction de la partie médiane 108A. Les fourreaux de résine, intercalés entre les parois des ouvertures 16, 16' et la périphérie extérieure des extrémités 108B, 108B' de la barre, en vue de l'assujettissement de cette dernière par rapport au chariot 6, ne sont donc plus globalement annulaires comme cela était le cas précédemment. Ces fourreaux 121, 121' comprennent une partie annulaire 122, 122' s'étendant au voisinage des parois cylindriques de chaque ouverture 16, 16', ainsi qu'une poche 123, 123' disposée au voisinage de chaque chanfrein 110, 110'. Bien que les extrémités 108B, 108B' de la barre 108 soient recouvertes d'un vernis anti-adhésif, cette barre est parfaitement immobilisée à la fois transversalement grâce aux parties annulaires 122, 122' des fourreaux de résine, ainsi qu'axialement puisque ces extrémités viennent en butée contre les poches 123, 123' qui font obstacle au déplacement de la barre.

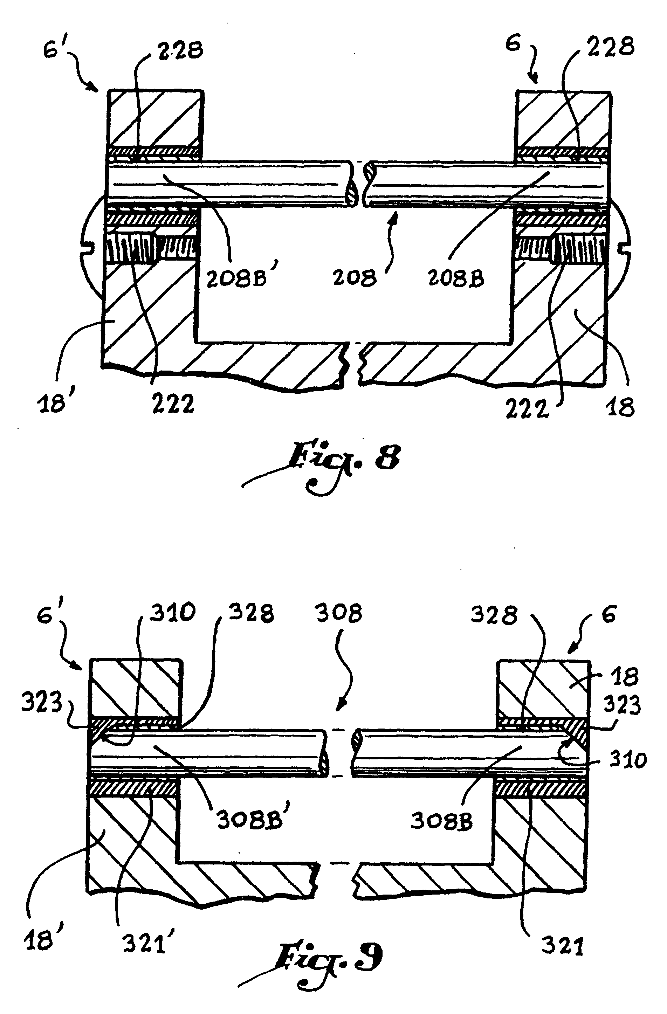

Dans le cas où l'on désire démonter cette barre 108, par exemple en vue de sa réparation, il est nécessaire de casser l'une des poches de résine, en l'occurrence la poche 123 comme cela est représenté à la figure 6. L'extrémité correspondante 108B de la barre 108 est alors libre de coulisser axialement au sein de la partie annulaire 122 du fourreau 121, du fait de la présence du vernis anti-adhésif. On fait ensuite passer la partie médiane 108A de plus faible section au travers de cette partie annulaire 122, puis on y fait enfin coulisser la seconde extrémité 108B' .

L'opération consistant à monter une nouvelle barre sur le rebord 6 s'opère de manière analogue, en introduisant cette nouvelle barre depuis l'ouverture 16 dépourvue de poche de résine 123. L'extrémité de cette nouvelle barre, introduite au préalable par cette ouverture 16, vient alors en butée contre la poche 123' non détruite, comme le montre la figure 7.

Grâce à l'invention, on confère au positionnement donné à cette nouvelle barre le même degré de précision qu'à celui de la première barre 108. En effet, chaque extrémité de la nouvelle barre est positionnée selon une direction transversale, grâce à la présence des parties annulaires 122, 122' au sein desquels les extrémités sont introduites. De plus, le positionnement axial de l'ensemble de la nouvelle barre est assuré par la poche 123' qui n'a pas été détruite lors du démontage de la première barre, poche contre laquelle la nouvelle barre vient en butée.

L'assujettissement en translation de cette nouvelle barre est réalisé en coulant une nouvelle poche de résine dans l'emplacement 124 de la poche 123 précédemment détruite.

On peut considérer que la poche de résine 123 disposée au sein de cet emplacement 124 constitue un moyen de fixation axiale amovible, puisqu'elle peut être remplacée de manière très simple. De plus, lorsqu'elle est enlevée, le positionnement transversal de la barre 8 par rapport aux ouvertures 16, 16' n'est pas altéré.

Les figures 8 et 9 illustrent deux variantes supplémentaires de l'invention. A la figure 8, la barre 208 présente un diamètre constant sur toute sa longueur. La périphérie extérieure de ses extrémités 208B, 208B' n'est pas recouverte d'un vernis anti-adhésif, mais est entourée par une bague annulaire 228, par exemple métallique.

La barre entourée par ces bagues, est donc scellée par la résine, puis on rapporte des vis 222 analogues à celles 22 des figures 3 et 4. Après avoir enlevé au moins une de ces dernières, la barre 208 peut être enlevée aisément du support 6, par coulissement au sein de la bague 228 située du côté où la vis est absente.

A la figure 9, la barre 308 présente également un diamètre constant sur toute sa longueur. Ses extrémités 308B, 308B' comprennent un chanfrein 310. La périphérie extérieure de ses extrémités 308B, 308B' n'est pas recouverte de vernis anti-adhésif, mais est entourée par une bague chanfreinée 328 dont le profil est conjugué de celui des extrémités 308B, 308B'. La barre 308 est scellée au support 6 en étant munie de ces bagues 328, par coulage de fourreaux de résines 321, 321' analogues à ceux représentés aux figures 5 à 7. Pour enlever la barre 308, on casse au moins l'une des poches 323 de résine et la barre 308 peut être ôtée aisément du support 6, par coulissement à l'intérieur de la bague disposée du côté où la poche est cassée.

## Revendications

1. Procédé de fixation d'un organe de guidage (8 ; 108 ; 208 ; 308) sur un support (6), dans lequel on ménage, dans le support (6), au moins une ouverture (16, 16') propre à recevoir une extrémité (8B, 8B' ; 108B, 108B' ; 208B, 208B' ; 308B, 308B') dudit organe de guidage et on introduit ladite extrémité dans l'ouverture (16, 16'), **caractérisé en ce qu'**on réalise l'ouverture selon des dimensions transversales supérieures à celles de l'extrémité (8B, 8B' ; 108B, 108B' ; 208B, 208B' ; 308B, 308B') qui y est reçue, on place l'organe de guidage (8 ; 108 ; 208 ; 308) dans la position précise qu'il doit occuper, on délimite ainsi un espace intercalaire (20) entre la périphérie extérieure de l'extrémité et les parois en regard de l'ouverture, on remplit ledit espace intercalaire (20) avec une résine polymérisable et l'on fait polymériser ladite résine de façon à assujettir ladite extrémité (8B, 8B' ; 108B, 108B' ; 208B, 208B' ; 308B, 308B') par rapport à ladite ouverture (16, 16').

2. Dispositif de guidage (2) obtenu selon le procédé de la revendication 1, comprenant au moins un organe de guidage (8 ; 108 ; 208 ; 308) fixé sur un support (6), chaque extrémité (8B, 8B' ; 108B, 108B' ; 208B, 208B' ; 308B, 308B') dudit organe de guidage étant logée dans une ouverture (16, 16') correspondante ménagée dans le support (6), **caractérisé en ce que** ladite ouverture (16, 16') a des dimensions transversales supérieures à celles de l'extrémité de l'organe de guidage, un fourreau (21, 21' ; 121, 121' ; 321, 321') formé d'une résine polymérisable à l'état solide étant coulé in-situ entre la périphérie extérieure de ladite extrémité (8B, 8B' ; 108B, 108B' ; 208B, 208B' ; 308B, 308B') et les parois en regard de l'ouverture (16, 16').

3. Dispositif de guidage selon la revendication 2, **caractérisé en ce que** l'organe de guidage (8 ; 108 ; 208 ; 308) peut coulisser axialement par rapport au fourreau et il est prévu, au voisinage de chaque extrémité (8B, 8B' ; 108B, 108B' ; 208B, 208B' ; 308B, 308B') de l'organe de guidage (8), des moyens amovibles (22, 22' ; 123, 123' ; 222 ; 323) d'immobilisation axiale de ladite extrémité (8B, 8B') par rapport au support (6).

4. Dispositif selon la revendication 3, **caractérisé en ce que** les moyens d'immobilisation amovibles comprennent au moins un élément de fixation (22, 22' ; 222) vissé dans une paroi du support au voisinage de l'ouverture (16, 16'), une partie (24, 24') dudit élément débordant au niveau de l'ouverture de manière à retenir en butée l'extrémité (8B, 8B' ; 208B, 208B') de l'organe de guidage.

5. Dispositif selon les revendications 3 ou 4, **caractérisé en ce que** ladite extrémité (108B, 108B' ; 308B, 308B') de l'organe de guidage (108 ; 308) comporte un décrochement (110, 110' ; 310), les moyens d'immobilisation amovibles comprenant une poche (123, 123' ; 323) de ladite résine, disposée au voisinage dudit décrochement.

6. Dispositif selon la revendication 5, **caractérisé en ce qu'**un chanfrein (110, 110' ; 310) est ménagé sur ladite extrémité (108B, 108B' ; 308, 308B').

7. Dispositif selon l'une des revendications 3 à 6, **caractérisé en ce qu'**un revêtement anti-adhésif est disposé à la périphérie extérieure des extrémités (8B, 8B' ; 108B, 108B') de l'organe de guidage (8 ; ; 108).

8. Dispositif selon l'une des revendications 2 à 7, **caractérisé en ce que** lesdites extrémités (8B, 8B' ; 108B, 108B') de l'organe de guidage (8 ; ; 108) sont reliées par une partie médiane (8A ; ; 108A) de plus faible section.

9. Dispositif selon l'une des revendications 3 à 6, **caractérisé en ce que** la périphérie extérieure des extrémités (208B, 208B' ; 308B, 308B') de l'organe de guidage (208 ; 308) est entourée au moyen d'une bague éventuellement chanfreinée (228 ; 328).

10. Appareil de marquage comportant au moins un dispositif de guidage conforme à l'une des revendications 2 à 9.

## Patentansprüche

1. Verfahren zum Befestigen eines Führungsgliedes (8; 108; 208; 308) an einem Träger (6), bei welchem in dem Träger (6) wenigstens eine zum Aufnehmen eines Endes (8B, 8B'; 108B, 108B'; 208B, 208B'; 308B, 308B') des Führungsgliedes geeignete Öffnung (16, 16') vorgesehen wird und das Ende in die Öffnung (16, 16') eingeführt wird, **dadurch gekennzeichnet, dass** die Öffnung in Querabmessungen ausgeführt wird, welche größer als diejenigen des Endes (8B, 8B'; 108B, 108B'; 208B, 208B'; 308B, 308B') sind, das dort aufgenommen wird, das Führungsglied (8; 108; 208; 308) in der präzisen Stellung angeordnet wird, die es einzunehmen hat, auf diese Weise ein zwischen dem äußeren Umfang des Endes und den Wänden betreffend die Öffnung befindlicher Raum (20) festgelegt wird, dieser dazwischen befindliche Raum (20) mit einem polymerisierbaren Harz ausgefüllt wird und das Harz derart polymerisiert wird, dass das Ende (8B, 8B'; 108B, 108B'; 208B, 208B'; 308B, 308B') in Bezug auf die Öffnung (16, 16') gut befestigt ist.

2. Führungsvorrichtung (2) hergestellt nach dem Verfahren des Anspruchs 1, umfassend wenigstens ein Führungsglied (8; 108; 208; 308), welches an einem Träger (6) befestigt ist, wobei jedes Ende (8B, 8B'; 108B, 108B'; 208B, 208B'; 308B, 308B') des Führungsgliedes in einer entsprechenden Öffnung (16, 16') aufgenommen ist, welche in dem Träger (6) vorgesehen ist, **dadurch gekennzeichnet, dass** die Öffnung (16, 16') Querabmessungen hat, die größer als diejenigen des Endes des Führungsgliedes sind, wobei eine Buchse (21, 21'; 121, 121'; 321, 321'), welche aus einem in den festen Zustand polymerisierbaren Harz gebildet ist, in situ zwischen den äußeren Umfang des Endes (8B, 8B'; 108B, 108B'; 208B, 208B'; 308B, 308B') und die Wände in Bezug auf die Öffnung (16, 16') gegossen wird.

3. Führungsvorrichtung nach Anspruch 2, **dadurch gekennzeichnet, dass** sich das Führungsglied (8; 108; 208; 308) in axialer Richtung in Bezug auf die Buchse verschieben kann und in der Nähe jedes Endes (8B, 8B'; 108B, 108B'; 208B, 208B'; 308B, 308B') des Führungsgliedes (8) bewegbare Mittel (22, 22'; 123, 123'; 222; 323) zum axialen Feststellen des Endes (8B, 8B') in Bezug auf den Träger (6) vorgesehen sind.

4. Vorrichtung nach Anspruch 3, **dadurch gekennzeichnet, dass** die bewegbaren Feststellmittel wenigstens ein Befestigungselement (22, 22'; 222) aufweisen, das in eine Wand des Trägers nahe der Öffnung (16, 16') geschraubt ist, wobei ein Teil (24, 24') des Elementes über die Ebene der Öffnung derart hinausragt, dass das Ende (8B, 8B'; 208B, 208B') des Führungsgliedes durch einen Anschlag zurückgehalten wird.

5. Vorrichtung nach den Ansprüchen 3 oder 4, **dadurch gekennzeichnet, dass** das Ende (108B, 108B'; 308B, 308B') des Führungsgliedes (108; 308) einen Absatz (110, 110'; 310) aufweist und die beweglichen Feststellmittel eine Tasche (123, 123'; 323) aus Harz aufweisen, die in der Nähe des Absatzes angeordnet ist.

6. Vorrichtung nach Anspruch 5, **dadurch gekennzeichnet, dass** eine Seitenfase (110, 110'; 310) an dem Ende (108B, 108B'; 308, 308B') vorgesehen ist.

7. Vorrichtung nach einem der Ansprüche 3 bis 6, **dadurch gekennzeichnet, dass** eine klebemittelfeste Umkleidung auf dem äußeren Umfang der Enden (8B, 8B'; 108B, 108B') des Führungsgliedes (8; 108) angeordnet ist.

8. Vorrichtung nach einem der Ansprüche 2 bis 7, **dadurch gekennzeichnet, dass** die Enden (8B, 8B'; 108B, 108B') des Führungsgliedes (8; 108) durch einen mittleren Teil (8A; 108A) mit geringerem Querschnitt verbunden sind.

9. Vorrichtung nach einem der Ansprüche 3 bis 6, **dadurch gekennzeichnet, dass** der äußere Umfang der Enden (208B, 208B'; 308B, 308B') des Führungsgliedes (208; 308) mittels einer gegebenenfalls angefasten Buchse (228; 328) umgeben ist.

10. Markiergerät umfassend wenigstens eine Führungsvorrichtung nach einem der Ansprüche 2 bis 9.

## Claims

1. Method for securing a guiding unit (8; 108; 208; 308) on a support (6), wherein there is provided in the support (6) at least one aperture (16, 16') which can receive one end (8B, 8B'; 108B, 108B'; 208B, 208B'; 308B, 308B') of the said guiding unit and the said end is introduced into the aperture (16, 16'), **characterised in that** the aperture is produced according to transverse dimensions greater than those of the end (8B, 8B'; 108B, 108B'; 208B, 208B'; 308B, 308B') which is received in it, the guiding unit (8; 108; 208; 308) is placed in the precise position which it must occupy, which thus delimits an interposed space (20) between the outer periphery of the end and the walls opposite the aperture, the said interposed space (20) is filled with a resin which can be polymerised and the said resin is polymerised such as to fix the said end (8B, 8B' ; 108B, 108B'; 208B, 208B' ; 308B, 308B') relative to the said aperture (16, 16').

2. Guiding device (2) obtained according to the method of claim 1, comprising at least one guiding unit (8; 108; 208; 308) secured to a support (6), each end (8B, 8B'; 108B, 108B'; 208B, 208B' : 308B, 308B') of the said guiding unit being accommodated in a corresponding aperture (16, 16') provided in the support (6), **characterised in that** the said aperture (16, 16') has transverse dimensions greater than those of the end of the guiding unit, a sleeve (21, 21'; 121, 121'; 321, 321') formed by a resin which can be polymerised in the solid state being poured in-situ between the outer periphery of the said end (8B, 8B'; 108B, 108B'; 208B, 208B'; 308B, 308B') and the walls opposite the aperture (16, 16').

3. Guiding device according to claim 2, **characterised in that** the guiding unit (8; 108; 208; 308) can slide axially relative to the sleeve, and in the vicinity of each end (8B, 8B'; 108B, 108B'; 208B, 208B'; 308B, 308B') of the guiding unit (8) there are provided detachable means (22, 22'; 123, 123'; 222, 323) for axial immobilisation of the said end (8B, 8B') relative to the support (6).

4. Device according to claim 3, **characterised in that** the detachable means for immobilisation comprise at least one securing element (22, 22'; 222) which is screwed into a wall of the support in the vicinity of the aperture (16, 16'), part (24, 24') of the said element projecting at the level of the aperture such as to retain the end (8B, 8B'; 208B, 208B') of the guiding unit in an abutted manner.

5. Device according to claim 3 or claim 4, **characterised in that** the said end (108B, 108B'; 308B, 308B') of the guiding unit (108; 308) comprises a set-back (110, 110' : 310), the detachable means for immobilisation comprising a pocket (123, 123'; 323) of the said resin disposed in the vicinity of the said set-back.

6. Device according to claim 5, **characterised in that** a chamfer (110, 110'; 310) is provided on the said end (108B, 108B'; 308, 308B').

7. Device according to any one of claims 3 to 6, **characterised in that** an anti-adhesive coating is disposed at the outer periphery of the ends (8B, 8B'; 108B, 108B') of the guiding unit (8; 108).

8. Device according to any one of claims 2 to 7, **characterised in that** the said ends (8B, 8B'; 108B, 108B') of the guiding unit (8; 108) are connected by a median part (8A; 108A) with a smaller cross-section.

9. Device according to any one of claims 3 to 6, **characterised in that** the outer periphery of the ends (208B, 208B'; 308B, 308B') of the guiding unit (208; 308) is surrounded by a ring which is optionally chamfered (228; 328).

10. Marking device comprising at least one guiding device according to any one of claims 2 to 9.
